# EUROPEAN PATENT SPECIFICATION

(11) **EP 2 013 615 B1**
(45) Date of publication and mention of the grant of the patent: **16.03.2016**
(21) Application number: 06795436.2
(22) Date of filing: 05.09.2006
(51) Int. Cl.: G01N 31/12, B01D 53/04, B01D 53/26

(54) **CO2 ABSORPTION DEVICE FOR ELEMENTAL ANALYSIS INSTRUMENTS**
CO2-ABSORPTIONSVORRICHTUNG FÜR ELEMENTARANALYSEGERÄTE
MÉCANISME D'ABSORPTION DE CO2 POUR INSTRUMENTS D'ANALYSE ÉLÉMENTAIRE

(30) Priority: 21.04.2006 IT MI20060813
(43) Date of publication of application: 14.01.2009
(73) Proprietor: Thermo Fisher Scientific S.p.A, 20090 Rodano (MI) (IT)
(72) Inventor: MAGNI, Paolo, I-20090 Rodano (MI) (IT); VILLA, Martino, I-20090 Rodano (IT); ZILIOLI, Giacinto, I-20090 Rodano (IT)
(74) Representative: Marietti, Giuseppe
(86) International application number: PCT/IB2006/002455
(87) International publication number: WO 2007/122448

(56) References cited:
- EP-A- 1 586 895
- DE-A1- 1 679 487
- US-A- 3 847 574
- US-A- 5 808 178
- US-A1- 2002 178 912
- US-B1- 6 660 240

## Description

### Background of the Invention

### Field of the Invention

The present invention concerns a CO₂ absorption device suitable for operation in an elemental analysis instrument, especially for nitrogen determination, particularly an instrument based on the Dumas method.

Such an instrument consists of a high temperature sample combustion reactor with a current of oxygen, where the combustion gasses pass into a reduction reactor with the elimination of water, carbon dioxide and any SO₂ present, prior to the gas being sent to a detector, particularly a nitrogen detector.

### Description of the prior art

The use of chemical filters for CO₂ elimination, which are simply replaced following a certain number of analytical cycles, are known in the art. However, such filters have a number of drawbacks, especially for high weight samples (for example 1-2 g of cereals) since the quantity of CO₂ to be absorbed demands large filters, which have a negative impact on analytical performance. Furthermore, the reaction with large quantities of CO₂ can be highly exothermic and lead to the curing of the absorbent material with increased load loss. The resulting increase in combustion reactor operating pressure reduces the conversion efficiency of the sample into elemental gas. Sending only a percentage of the combustion gas to the filter has been proposed as a solution for obviating such drawbacks, but this influences the accuracy and reproducibility of the analyses, and leads to further complications in the instrument pneumatics.

CO₂ filters, acting at the physical level, which can be regenerated by means of heating and passing regenerative gas through, have also been proposed. In cases involving large quantities of CO₂, such filters must necessarily also have large dimensions, and require long periods of time (of the order of 15 minutes) for their regeneration and subsequent cooling. Furthermore, it is practically essential to provide an upstream water filter, since the CO₂ filter would absorb water more or less irreversibly, with consequential degradation of efficiency.

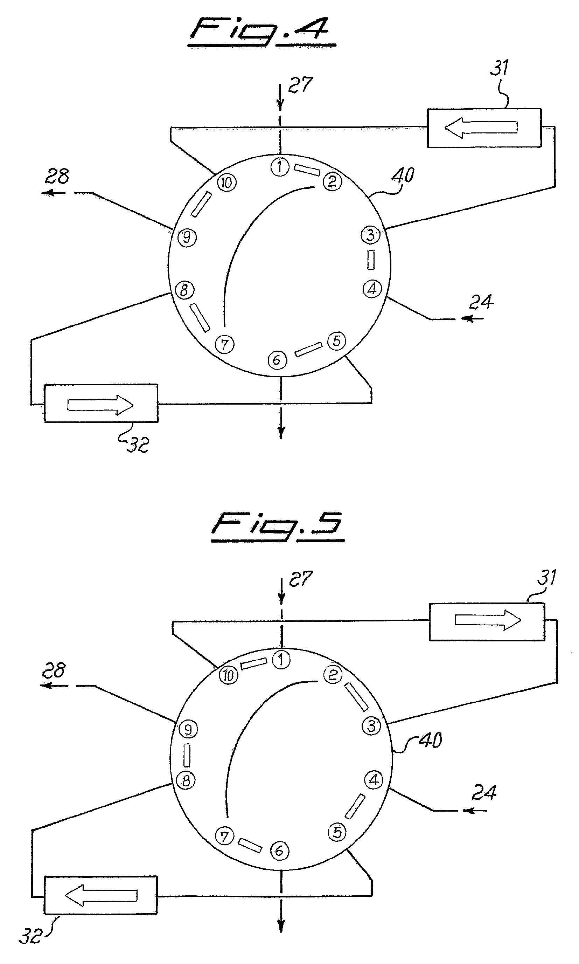

US-B1-6,660,240 relates to a gas purification apparatus and a gas purification method for simultaneously removing CO, H₂, CO₂ and water vapour contained in a gas. Figure 4 shows the flow diagram of the purification apparatus according to one preferred embodiment. Two purifiers are shown: while compressed air is purified in the first purifier, a regeneration is carried out in the second purifier for removing the impurities adsorbed in the different layers. US-B1-6,660,240 aims to purify a fed gas at industrial level by means of using a particular gas processing agent and large as well as relatively short filters. Said gas processing agent has a long life time and allows to improve the productivity of the purification process.

Patent application EP 1586895 illustrates an elemental analysis instrument envisaging a carousel with a number of regenerable CO₂ filters, which are brought in succession into the operating position and then into the regeneration position. This solution allows reduced regeneration times, and the ability to move from one analysis to the next without pausing. However, there are problems with the pneumatic seals and, in the case of heavy samples, the device requires individual, large sized filters and therefore has a tendency to be excessively bulky.

### Summary of the invention

The scope of the present invention is therefore that of providing a device for absorbing CO₂, intended for use in an elemental analysis Instrument, that is both regenerable, capable of operating without any moving parts, with high efficiency, and does not require any time for regeneration between one analysis and the next, even for high weight samples.

These scopes, and others, which will become evident from the following description, are achieved by a CO₂ absorption device according to claims 1 to 15 operating in an elemental analysis instrument according to claims 16 to 19.

### Drawings

The device and the instrument according to the invention will be described with reference to a preferred embodiment, illustrated schematically, purely by way of non-limiting illustration, in the attached figures, in which:
- Fig. 1 is a diagram of an elemental analyser fitted with a CO₂ absorption device according to the invention.
- Figs. 2 and 3 are schematic illustrations of the absorption and regeneration supply methods for the filters making up the device according to the invention.
- Figs. 4 and 5 schematically depict a control valve for the filters operating in accordance with figures 2 and 3.
- Figure 6 depicts an example of a CO₂ absorption filter according to the invention.

### Description of the preferred embodiments.

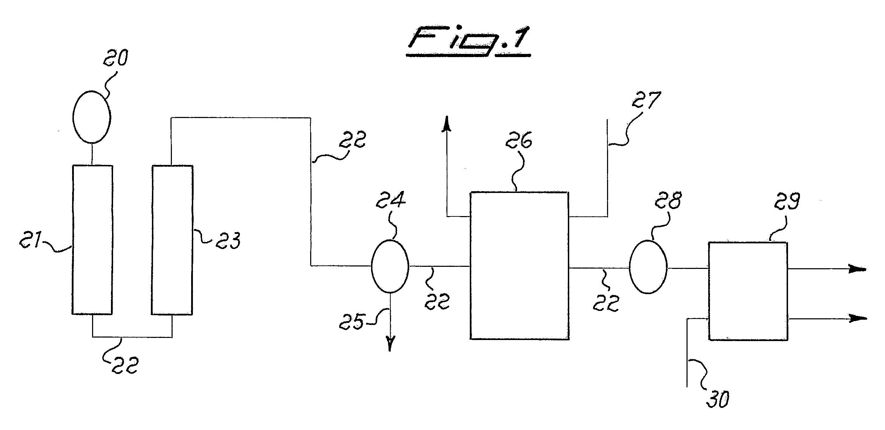

The diagram in figure fig. 1 refers to an elemental analysis instrument, in the configuration shown, with an automatic sampler 20 capable of sending samples one at a time to an oxidation reactor 21 maintained at a high temperature (approx. 1000 °C or higher). At the same time, the supply of carrier gas, generally consisting of helium, is switched to supplying oxygen in order to achieve the so-called very high temperature "flash" combustion in the reactor 21. The combustion gasses are then sent, by means of a pneumatic line 22 borne by the carrier, to a reduction reactor 23, downstream of which the carrier transports the "elemental" gasses, N₂, CO₂, H₂O and possibly SO₂, by means of said line 22.

A water condenser 24 is fitted to the line 22 in order to remove condensed water, and discharge it externally by means of line 25. Line 22 then feeds gas to the device 26 which handles the absorption of the CO₂, any remaining water and any SO₂, if present.

The device 26 has two filters, one involved in the absorption stage and one undergoing regeneration by means of heating and passing through a regenerating gas, which may be the same helium carrier, supplied and exhausted by means of line 27. A gas chromatography column 28 and a detector 29, to which a reference gas is also supplied by means of line 30, are arranged downstream in the known manner.

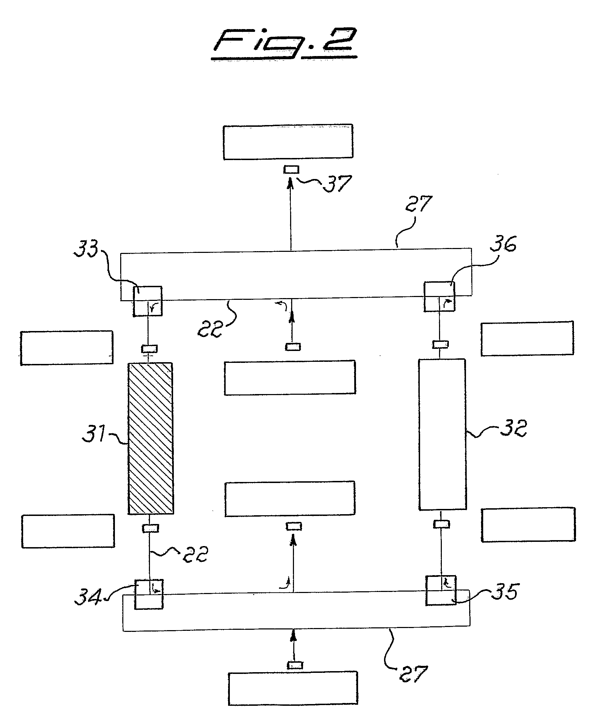

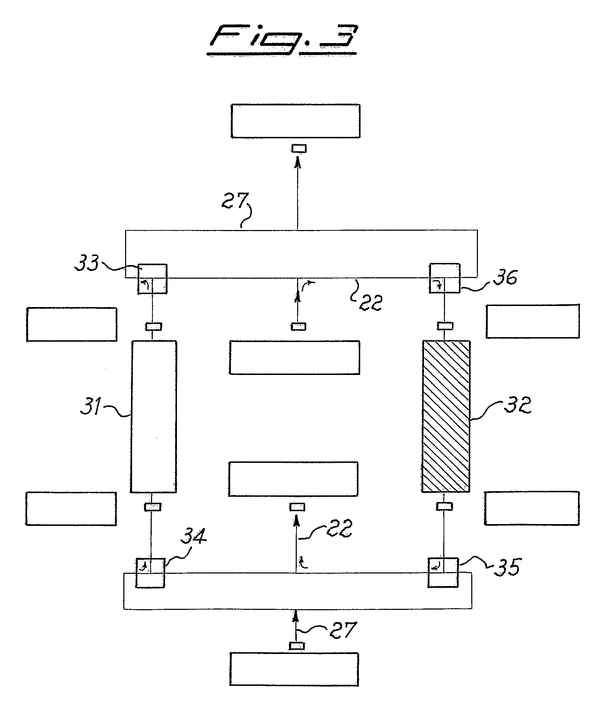

The device 26 is shown schematically in figures 2 and 3. It consists of two regenerable filters 31 and 32 and pneumatic connections for supplying the same with the combustion gasses and with the regenerating gas. More precisely, with reference to fig. 2, the filter 31, in absorption mode, is fed using line 22 coming from the water condenser 24 by means of a three-way, two position electrovalve 33. On emerging from the first electrovalve, the gas passes through a second three-way, two position electrovalve 34 in order to be fed to the gas chromatography column 28. At the same time, the regenerating gas (helium) is fed into the second filter 32 by means of line 27 through a third, three-way, two position electrovalve 35, while the exhaust from the filter 32 is discharged to 37 under the control of a fourth, three-way, two position valve.

Figure 3 shows the set-up for absorption by filter 32 and regeneration of filter 31, obtained by switching over the four electrovalves 33-36. In this case, the combustion gas is fed into filter 32 by means of electrovalve 36 and sent to the gas chromatography column by means of electrovalve 35. The regenerating carrier is fed into filter 31 by means of electrovalve 34 and exhausted by means of electrovalve 33.

It should be observed that the pneumatic connections shown operate in such a way that filter regeneration always occurs with a flow of carrier in the opposite direction with respect to the flow of gas during the absorption stage for the same filter. This is very important since, as will be appreciated below, it allows improved regeneration conditions, and hence improved device operating conditions.

In figures 4 and 5, valves 33-36 are replaced by a single 10-ways, two position valve 40.

In the first position shown in figure 4, the regeneration gas, coming in through port 1, is directed, by means of ports 2, 7 and 8 - through the filter 32 and then from the latter, by means of ports 5 and 6, to exhaust. At the same time, the gasses emerging from the water condenser 24 are sent, by means of ports 4 and 3 to the filter 31 during the analytical stage, and then from the latter, by means of ports 10 and 9, to the gas chromatography column 28.

In the position shown in figure 5, the valve 40 sets the filter 31 in the conditions for regeneration by supplying the regenerating gas, by means of ports 1, 10, 3, 2, 7 and 6, while the filter 32 is in analytical mode, and the gasses coming out of the water condenser 24 by means of ports 4 and 5 pass through it and are then conveyed to the gas chromatography column 28 by means of ports 8 and 9.

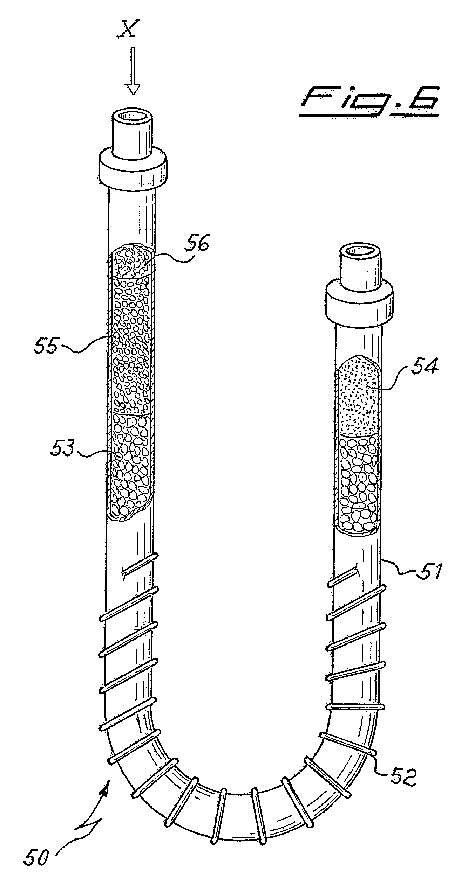

With reference to figure 6, each filter 50 consists of an elongated tubular element 51 with an internal diameter comprised of between 4 mm and 10 mm, and length between 50 and 200 cm, optionally folded over into a U-shape for reasons of bulk. The tubular element is made from thermoconductive material, for example a metal, preferably steel, wound around the outer surface of which is at least one heating element 52, preferably a single wire playing the simultaneous roles of heating element and temperature measuring element during regeneration.

The interior volume of the tube is filled with a packing composed of one or more CO₂-absorbent materials arranged and/or selected so as to provide a CO₂ absorbent power that increases from the filter inlet to the filter outlet in the direction, marked X, taken by the gas during the analysis stage. In particular, said material may be comprised of molecular sieves with granulometry that decreases from the inlet to the outlet in the aforementioned direction, in particular, for example, two different granulometries, as shown the larger in 53 and the finer in 54, respectively.

Still in the direction undertaken by the gas undergoing analysis, upstream of the CO₂-absorbent material is preferably positioned an absorbent material 55 for any H₂O not retained by the condenser 24, and upstream of this latter item at least one SO₂-absorbent material 56 may be optionally positioned.

This layout of the materials making up the filter considerably aids the regeneration stage, which, as already mentioned, occurs with the flow in the opposite direction, so that, during regeneration, any SO₂ and water do not pass through, and therefore have no effect on the CO₂-absorbent materials. The latter are then treated by the flow of regenerating gas in such a way that the fresh gas first comes into contact with the areas most loaded with CO₂ then little by little moving onto the least loaded areas, towards the end of its path. This improves the regeneration conditions and effects which, thanks also to the other construction details of the filter and its reduced thermal mass, may be completed and the filter cooled within a very short period of time, typically between 3 to 8 minutes.

A fan assists with speeding up the filter cooling process, in order to complete the regeneration process in times that are essentially equal to those required for analysis.

## Claims

1. A CO₂-absorption device for an elemental analysis instrument consisting of at least one combustion reactor and one detector for the analysis of gasses exiting from the combustion reactor, connected by a pneumatic line along which is to be positioned said CO₂-absorption device, downstream of the combustion reactor and upstream of the detector, wherein said device consists of two regenerable CO₂ filters, one or more valve means for supplying gas undergoing analysis to one of said filters, alternating with the other filter for each consecutive analysis, and for supplying a regenerative flow of wash gas to the second filter, in the opposite direction with respect to the direction taken by the gas undergoing analysis in the same filter, as well as means for temporarily heating the filter during the regeneration stage, and each filter has an internal diameter comprised of between 4 mm and 10 mm, and a length comprised of between 0,5 m and 2 m.

2. A device according to claim 1, **characterised in that** said filters each contain a packing of CO₂-absorbent material, such materials being selected and/or arranged in order to provide absorbent power that increases from the inlet to the outlet in the direction taken by the gas undergoing analysis.

3. A device according to claim 2, **characterised in that** said packing materials have a granulometry that decreases from the inlet to the outlet of each filter.

4. A device according to claims 2 or 3, **characterised in that** the CO₂-absorbent materials consist of molecular sieves.

5. A device according to one of the claims 2 to 4, **characterised in that** it comprises at least one H₂O-absorbant material located upstream of the CO₂-absorbent materials, in relation to the direction taken by the gas undergoing analysis inside the filter.

6. A device according to claim 5, **characterised in that** the H₂O-absorbent material consists of silica gel or activated alumina.

7. A device according to claim 5 or 6, **characterised in that** it comprises at least one SO₂-absorbant material located upstream of the H₂O-absorbent materials, in relation to the direction taken by the gas undergoing analysis inside the filter.

8. A device according to claim 7, **characterised in that** the SO₂-absorbent material consists of activated charcoal or silica gel.

9. A device according to one of the previous claims, **characterised in that** each filter has an essentially elongated tubular configuration.

10. A device according to claim 9, **characterised in that** the body of each filter has a side wall with a thickness not greater than 1 mm, made from a thermoconductive material, around which is wound at least one hearting element.

11. A device according to claim 10 **characterised in that** said heating element is in the form of a wire simultaneously acting as a heating element and a temperature measuring element.

12. A device according to claim 10 or 11, **characterised in that** said heating element wire is coiled with variations in pitch to give rise to differential degrees of heating along said filter tube.

13. A device according to claim 10 **characterised in** comprising means for a direct application of the electrical current to the side walls of the filter.

14. A device according to one or more of the previous claims, **characterised in that** the valve means are constituted by three-way, two position valves.

15. A device according to one or more of claims 1 to 13, **characterised in that** the valve means are constituted by a single ten-way, two position valve.

16. An elemental analysis instrument comprising a combustion reactor, means for alternately supplying a carrier gas and O₂ to the combustion reactor and at least one detector, **characterised by** comprising, in its pneumatic circuit from the reactor to the detector, a CO₂-absorption device according to one or more of the previous claims.

17. An elemental analysis instrument according to claim 16, **characterised by** comprising an H₂O trap upstream of the CO₂-absorption device within the pneumatic circuit.

18. An elemental analysis instrument according to claim 16 or 17, **characterised in** comprising a reduction reactor downstream of the combustion reactor within said pneumatic circuit.

19. An elemental analysis instrument according to one of the claims 16 to 18, **characterised in that** said detector is a nitrogen detector.

## Patentansprüche

1. Eine CO₂-Absorptionsvorrichtung für ein Elementaranalyse-Gerät, bestehend aus wenigstens einem Verbrennungsreaktor und einem Detektor zur Analyse von Gasen, welche aus dem Verbrennungsreaktor austreten, verbunden mit einer pneumatischen Leitung, entlang welcher die CO₂-Absorptionsvorrichtung anzuordnen ist, stromabwärts des Verbrennungsreaktors und stromaufwärts des Detektors, wobei die Vorrichtung aus zwei regenerierbaren CO₂-Filtern besteht, einem oder mehreren Ventilmitteln, um das zu analysierende Gas einem der Filter zuzuführen, abwechselnd mit dem anderen Filter für die jeweils nachfolgende Analyse, und für das Zuführen eines regenerierenden Stroms an Spülgas zum zweiten Filter in die entgegengesetzte Richtung in Bezug auf die Richtung, die von dem zu analysierenden Gas im selben Filter genommen wird, ebenso wie Hilfsmittel für das zeitweilige Erwärmen des Filters während des Schritts der Regeneration, und jeder Filter einen Innendurchmesser aufweist von zwischen 4 mm und 10 mm, und eine Länge aufweist von zwischen 0,5 m und 2 m.

2. Eine Vorrichtung nach Anspruch 1, **dadurch gekennzeichnet, dass** die Filter jeweils eine Packung an CO₂-absorbierendem Material enthalten, wobei derartige Materialien ausgewählt und/oder angeordnet sind, um ein Absorptionsvermögen bereitzustellen, welches sich erhöht vom Einlass zum Auslass hin in die vom zu analysierenden Gas genommene Richtung.

3. Eine Vorrichtung nach Anspruch 2, **dadurch gekennzeichnet, dass** die Packungsmaterialien eine Granulometrie aufweisen, welche sich vom Einlass zum Auslass hin des jeweiligen Filters verringert.

4. Eine Vorrichtung nach den Ansprüchen 2 oder 3, **dadurch gekennzeichnet, dass** die CO₂-absorbierenden Materialien aus Molekularsieben bestehen.

5. Eine Vorrichtung nach einem der Ansprüche 2 bis 4, **dadurch gekennzeichnet, dass** diese wenigstens ein H₂O-absorbierendes Material umfasst, angeordnet stromaufwärts der CO₂-absorbierenden Materialien in Bezug auf die Richtung, welche vom zu analysierenden Gas im Inneren des Filters genommen wird.

6. Eine Vorrichtung nach Anspruch 5, **dadurch gekennzeichnet, dass** das H₂O-absorbierende Material aus Silicagel oder aktiviertem Aluminiumoxid besteht.

7. Eine Vorrichtung nach Anspruch 5 oder 6, **dadurch gekennzeichnet, dass** diese wenigstens ein SO₂-absorbierendes Material umfasst, angeordnet stromaufwärts des H₂O-absorbierenden Materials in Bezug auf die Richtung, welche vom zu analysierenden Gas im Inneren des Filters genommen wird.

8. Eine Vorrichtung nach Anspruch 7, **dadurch gekennzeichnet, dass** das SO₂-absorbierende Material aus Aktivkohle oder Silicagel besteht.

9. Eine Vorrichtung nach einem der vorhergehenden Ansprüche, **dadurch gekennzeichnet, dass** jeder Filter einen im Wesentlichen gestreckten, röhrenförmigen Aufbau besitzt.

10. Eine Vorrichtung nach Anspruch 9, **dadurch gekennzeichnet, dass** der Körper jedes Filters eine Seitenwand besitzt mit einer Dicke von nicht mehr als 1 mm, hergestellt aus einem wärmeleitenden Material, um welches wenigstens ein Heizelement gewunden ist.

11. Eine Vorrichtung nach Anspruch 10, **dadurch gekennzeichnet, dass** das Heizelement die Form eines Drahtes aufweist, welches als Heizelement und zugleich als Temperaturmesselement dient.

12. Eine Vorrichtung nach Anspruch 10 oder 11, **dadurch gekennzeichnet, dass** der Heizelementdraht gewendelt ist mit Variation der Abstände zwischen den Windungen, um unterschiedliche Ausmaße des Heizens entlang der Filterröhre zu ermöglichen.

13. Eine Vorrichtung nach Anspruch 10, **gekennzeichnet durch** das Umfassen von Hilfsmitteln für eine direkte Anwendung des elektrischen Stroms auf die Seitenwände des Filters.

14. Eine Vorrichtung nach einem oder mehreren der vorhergehenden Ansprüche, **dadurch gekennzeichnet, dass** die Ventilmittel gebildet werden durch Dreiwegeventile mit zwei Positionen.

15. Eine Vorrichtung nach einem oder mehreren der Ansprüche 1 bis 13, **dadurch gekennzeichnet, dass** die Ventilmittel gebildet werden durch ein einzelnes Zehnwegeventil mit zwei Positionen.

16. Ein Elementaranalyse-Gerät, umfassend einen Verbrennungsreaktor, Hilfsmittel für das abwechselnde Zuführen von Trägergas und O₂ zum Verbrennungsreaktor und wenigstens einen Detektor, **dadurch gekennzeichnet, dass** jenes, in dessen pneumatischen Kreislauf vom Reaktor zum Detektor, eine CO₂-Absorptionsvorrichtung umfasst nach einem oder mehreren der vorhergehenden Ansprüche.

17. Ein Elementaranalyse-Gerät nach Anspruch 16, **dadurch gekennzeichnet, dass** dieses eine H₂O-Falle stromaufwärts der CO₂-Absorptionsvorrichtung innerhalb des pneumatischen Kreislaufs umfasst.

18. Ein Elementaranalyse-Gerät nach Anspruch 16 oder 17, **dadurch gekennzeichnet, dass** dieses einen Reduktionsreaktor stromabwärts des Verbrennungsreaktors innerhalb des pneumatischen Kreislaufs umfasst.

19. Ein Elementaranalyse-Gerät nach einem der Ansprüche 16 bis 18, **dadurch gekennzeichnet, dass** der Detektor ein Stickstoff-Detektor ist.

## Revendications

1. Dispositif d'absorption de CO₂ pour instrument d'analyse élémentaire consistant en au moins un réacteur de combustion et un détecteur pour l'analyse de gaz sortant du réacteur de combustion, relié par une conduite pneumatique le long de laquelle doit être positionné ledit dispositif d'absorption de CO₂, en aval du réacteur de combustion et en amont du détecteur, dans lequel ledit dispositif consiste en deux filtres à CO₂ qui peuvent être régénérés, un ou plusieurs moyens formant valves destinés à fournir un gaz à analyser à l'un desdits filtres, en alternance avec l'autre filtre pour chaque analyse consécutive, et à fournir au second filtre un flux régénérateur de gaz de lavage, dans le sens opposé au sens que prend le gaz à analyser dans le même filtre, ainsi qu'un moyen permettant de chauffer le filtre temporairement pendant l'étape de régénération, et chaque filtre a un diamètre interne compris entre 4 mm et 10 mm, et une longueur comprise entre 0,5 m et 2 m.

2. Dispositif selon la revendication 1, **caractérisé en ce que** lesdits filtres contiennent chacun un remplissage de matériau absorbant le CO₂, de tels matériaux étant choisis et/ou disposés afin de fournir un pouvoir absorbant qui augmente de l'entrée à la sortie dans le sens pris par le gaz à analyser.

3. Dispositif selon la revendication 2, **caractérisé en ce que** lesdits matériaux de remplissage ont une granulométrie qui diminue de l'entrée à la sortie de chaque filtre.

4. Dispositif selon les revendications 2 ou 3, **caractérisé en ce que** lesdits matériaux absorbant le CO₂ consistent en des tamis moléculaires.

5. Dispositif selon l'une des revendications 2 à 4, **caractérisé en ce qu'**il comprend au moins un matériau absorbant le H₂O situé en amont des matériaux absorbant le CO₂, par rapport au sens pris par le gaz à analyser à l'intérieur du filtre.

6. Dispositif selon la revendication 5, **caractérisé en ce que** le matériau absorbant le H₂O consiste en du gel de silice ou de l'alumine activée.

7. Dispositif selon la revendication 5 ou 6, **caractérisé en ce qu'**il comprend au moins un matériau absorbant le SO₂ situé en amont des matériaux absorbant le H₂O, par rapport au sens pris par le gaz à analyser à l'intérieur du filtre.

8. Dispositif selon la revendication 7, **caractérisé en ce que** le matériau absorbant le SO₂ consiste en du charbon actif ou du gel de silice.

9. Dispositif selon l'une des revendications précédentes, **caractérisé en ce que** chaque filtre présente une configuration tubulaire essentiellement allongée.

10. Dispositif selon la revendication 9, **caractérisé en ce que** le corps de chaque filtre comprend une paroi latérale ayant une épaisseur inférieure ou égale à 1 mm, fabriqué à partir d'un matériau thermoconducteur, autour duquel est enroulé au moins un élément chauffant.

11. Dispositif selon la revendication 10, **caractérisé en ce que** ledit élément chauffant est de la forme d'un fil agissant simultanément comme élément chauffant et comme élément de mesure de la température.

12. Dispositif selon la revendication 10 ou 11, **caractérisé en ce que** ledit fil servant d'élément chauffant est bobiné de sorte à présenter des variations de pas afin d'obtenir des degrés différentiels de chauffage le long dudit tube de filtre.

13. Dispositif selon la revendication 10, **caractérisé en ce qu'**il comprend un moyen destiné à une application directe du courant électrique au niveau des parois latérales du filtre.

14. Dispositif selon une ou plusieurs des revendications précédentes, **caractérisé en ce que** les moyens formant valves sont constitués de valves à trois voies ayant deux positions.

15. Dispositif selon une ou plusieurs des revendications 1 à 13, **caractérisé en ce que** les moyens formant valves sont constitués d'une unique valve à dix voies ayant deux positions.

16. Instrument d'analyse élémentaire comprenant un réacteur de combustion, un moyen permettant de fournir au réacteur de combustion et à au moins un détecteur en alternance un gaz transporteur et du O₂, **caractérisé en ce qu'**il comprend, au niveau de son circuit pneumatique allant du réacteur au détecteur, un dispositif d'absorption de CO₂ selon une ou plusieurs des revendications précédentes.

17. Instrument d'analyse élémentaire selon la revendication 16, **caractérisé en ce qu'**il comprend un piège à H₂O en amont du dispositif d'absorption de CO₂ au sein du circuit pneumatique.

18. Instrument d'analyse élémentaire selon la revendication 16 ou 17, **caractérisé en ce qu'**il comprend un réacteur de réduction en aval du réacteur de combustion au sein dudit circuit pneumatique.

19. Instrument d'analyse élémentaire selon l'une des revendications 16 à 18, **caractérisé en ce que** ledit détecteur est un détecteur d'azote.
